# EUROPEAN PATENT APPLICATION

(11) **EP 2 065 607 A2**
(43) Date of publication of application: **03.06.2009**
(21) Application number: 08290319.6
(22) Date of filing: 01.04.2008
(51) Int. Cl.: F16D 48/06

(54) **Torque-controlling actuator clutch and tool system having the same**

(30) Priority: 30.11.2007 KR 20070123710; 30.01.2008 KR 20080009807
(71) Applicant: Sehan Electools, Ltd., Budang-gu Seongnam-si Gyeonggi-do 463-816 (KR)
(72) Inventor: Yoo, Jin-Suk, Seoul 134-070 (KR)
(74) Representative: Le Forestier, Eric

(57) **Abstract**

A torque-controlling actuator clutch (240) is used in a tool system with a motor for rotating a bit. The actuator clutch (240) includes a driving shaft (241) rotatingly driven by the motor (220), a driven shaft (242) operatively connected to and rotated by the driving shaft (241), the bit removably attached to the driven shaft (242), a clutch mechanism (243) for selectively coupling and uncoupling the driving shaft and the driven shaft and an actuator (244) operated by a pressure of a working medium for pressing the clutch mechanism (243) into engagement so that a torque can be transferred from the driving shaft (241) to the driven shaft (242). A control unit (300) is used to control the pressure of the working medium supplied to the actuator (244) and the torque transferred from the driving shaft to the driven shaft.

## Description

### CROSS-REFERENCE TO RELATED APPLICATIONS

The present invention claims priority of Korean Patent Application Nos. 10-2007-0123710 and 10-2008-0009807, filed on November 30, 2007 and January 30, 2008, respectively which are incorporated herein by reference.

### Field of the Invention

The present invention relates to a torque-controlling actuator clutch and a tool system provided with the same. More specifically, the present invention pertains to a torque-controlling actuator clutch that makes use of a pneumatic actuator or a hydraulic actuator instead of a compression spring and allows a target torque value to be directly inputted, stored and used on a torque unit basis and a tool system provided with the torque-controlling actuator clutch.

### Background of the Invention

In general, an electric driver refers to a hand-held electric power tool for forcefully fastening or loosening a driven object (e.g., a screw) using the power of an electric motor. The electric driver, one of electric power tools for use in fastening and loosening a screw to and from a workpiece made of wood, metal or the like, is largely classified into a rechargeable electric driver and a wired electric driver using commercial electricity as a power source.

In order to fasten a screw to a workpiece, the electric driver is designed to control a driven shaft thereof. The load borne by the driven shaft is equal to the torque acting when the screw is tightened by means of a driver bit. A clutch device that uses the compression force of a spring to control the torque of the screw to be fastened to the workpiece is usually employed in the electric driver.

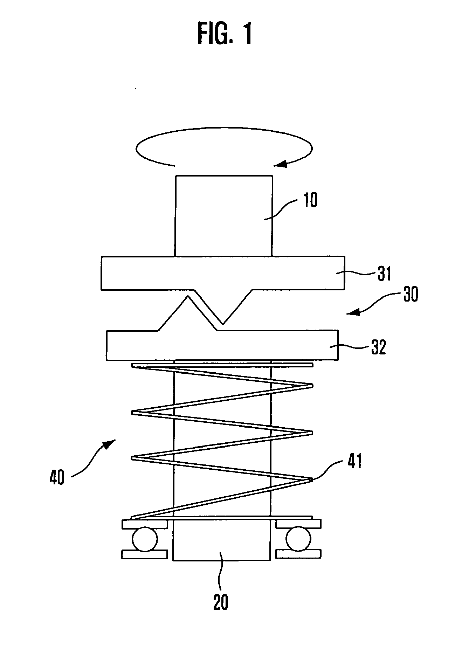

Fig. 1 shows a structure of a conventional clutch for controlling a torque by use of the compression force of a spring. The structure and operation of the conventional spring-based clutch will now be described with reference to Fig. 1.

In the conventional clutch 30, a clutch member 31 of a driving shaft 10 is operatively connected to a clutch member 32 of a driven shaft 20 through a cam. The clutch member 32 of the driven shaft 20 is coupled to the clutch member 31 of the driving shaft 10 by the compression force of a spring 41 of a spring device 40. The clutch member 31 of the driving shaft 10, the clutch member 32 of the driven shaft 20 and the spring 41 of the spring device 40 are rotated together.

In this regard, if the load borne by the driven shaft 20 is smaller than the compression force of the spring 41, the clutch members 31 and 32 of the clutch 30 are kept in an engaged state. However, if the load borne by the driven shaft 20 is greater than the compression force of the spring 41, the clutch members 31 and 32 are disengaged from each other.

As set forth above, it is the typical torque control method in the motor-driven fastening tool that one of the clutch members 31 and 32 of the clutch 30 is axially fixed and the other is pressed against the fixed one by use of the compression force of the spring 41. At this time, the engaging force of the clutch 30 is decided by the compression force of the spring 41 which in turn is adjusted by tightening or loosening a nut-type spring rest.

With the clutch using the compression force of the spring 41, it is impossible to calculate the compression force of the spring 41 and the torque of the driven shaft 20. In the clutch, the compression force of the spring 41 should be changed in order to obtain a specified torque. In other words, there is a need to conduct onerous tasks of changing the compression force of the spring 41 step by step and measuring the torque corresponding to the changed compression force by use of a torque meter (not shown).

More specifically, in case an attempt is made to change the current torque, the compression force of the spring 41 is adjusted while repeatedly tightening and loosening a nut for supporting the spring 41. During this process, the force required in rotating the nut is measured by a torque meter, thereby setting a desired torque. Therefore, in order to adjust the torque, it is necessary to adjust the compression force of the spring 41 by tightening or loosening the nut and also to use the torque meter in the torque adjusting process. This poses a problem in that the torque adjusting process becomes time-consuming and the desired torque cannot be set with increased accuracy.

Furthermore, in case of adjusting the torque as noted above, it is necessary for an operator to change step by step and set the compression force of the spring 41 while holding the torque meter. For this reason, if there is a need to fasten screws with two or more different torques, it is usual for the operator to use two or more electric drivers, the torques of which are set differently in advance. This is problematic in that the fastening tools need to be prepared in plural numbers.

### Summary of the Invention

In view of the above-noted and other problems inherent in the prior art, it is an object of the present invention to provide a torque-controlling actuator clutch that makes it possible for a user to directly input, store and use a target torque value on a torque unit basis and allows the user to set the target torque value with ease and a tool system provided with the torque-controlling actuator clutch.

In one aspect of the present invention, there is provided a torque-controlling actuator clutch for use in a tool system with a motor for rotating a bit, comprising: a driving shaft rotatingly driven by the motor; a driven shaft operatively connected to and rotated by the driving shaft, the bit removably attached to the driven shaft; a clutch mechanism for selectively coupling and uncoupling the driving shaft and the driven shaft; and an actuator operated by a pressure of a working medium for pressing the clutch mechanism into engagement so that a torque can be transferred from the driving shaft to the driven shaft.

In the torque-controlling actuator clutch, the clutch mechanism includes a first clutch member fixed to the driving shaft and a second clutch member fixed to the driven shaft, the actuator designed to press the second clutch member against the first clutch member when the working medium is supplied to the actuator.

In the torque-controlling actuator clutch, the actuator includes a cylinder for receiving the working medium, a piston slidably fitted to the cylinder for pressing the second clutch member when extended and a bearing arranged between the piston and the second clutch member.

In another aspect of the present invention, there is provided a tool system comprising: a tool unit including a motor for rotating a bit and an actuator clutch engaged and disengaged by a pressure of a working medium for operatively connecting and disconnecting the bit and the motor; a control unit for controlling the pressure of the working medium supplied to the actuator clutch and for stopping the motor when the actuator clutch is disengaged; and a working medium source for supplying the working medium to the actuator clutch.

In the tool system, the actuator clutch comprises: a driving shaft rotatingly driven by the motor; a driven shaft operatively connected to and rotated by the driving shaft, the bit removably attached to the driven shaft; a clutch mechanism for selectively coupling and uncoupling the driving shaft and the driven shaft; and an actuator operated by the pressure of the working medium for pressing the clutch mechanism into engagement so that a torque can be transferred from the driving shaft to the driven shaft.

The tool system may further comprise a pressure regulator controlled by the control unit for regulating the pressure of the working medium supplied to the actuator and a sensor for detecting disengagement of the clutch mechanism to generate an electrical signal.

In the tool system, the control unit is designed to control the pressure regulator in such a manner that the pressure of the working medium supplied to the actuator corresponds to a torque value pre-stored in the control unit.

In the tool system, the control unit is designed to stop the motor in response to the electric signal generated by the sensor.

In the tool system, the clutch mechanism includes a first clutch member fixed to the driving shaft and a second clutch member fixed to the driven shaft, the actuator designed to press the second clutch member against the first clutch member when the working medium is supplied to the actuator.

In the tool system, the actuator includes a cylinder for receiving the working medium, a piston slidably fitted to the cylinder for pressing the second clutch member when extended and a bearing arranged between the piston and the second clutch member.

In accordance with the present invention, use of the pneumatic or hydraulic actuator in combination with the clutch mechanism makes it easy to finely set the torque transferred from the driving shaft to the driven shaft. Furthermore, it is possible to pre-set and store a plurality of desired torque values on a torque unit basis, thereby eliminating the need to use a torque meter.

### Brief Description of the Drawings

The above and other objects and features of the present invention will become apparent from the following description of preferred embodiments, given in conjunction with the accompanying drawings, in which:
Fig. 1 shows a structure of a conventional clutch that controls a torque using a compression force of a spring;
Fig. 2 is a view schematically showing a configuration of a tool system in accordance with one embodiment of the present invention;
Fig. 3 is a block diagram illustrating the present tool system provided with a torque-controlling actuator clutch in accordance with one embodiment of the present invention;
Fig. 4 is a view showing the torque-controlling actuator clutch in accordance with one embodiment of the present invention;
Figs. 5A, 5B and 5C are explanatory views illustrating the operation of the torque-controlling actuator clutch in accordance with one embodiment of the present invention; and
Fig. 6 is a perspective view showing a plug of a cable employed in the present tool system.

### Detailed Description of the Preferred Embodiments

Preferred embodiments of the present invention will now be described in detail with reference to the accompanying drawings.

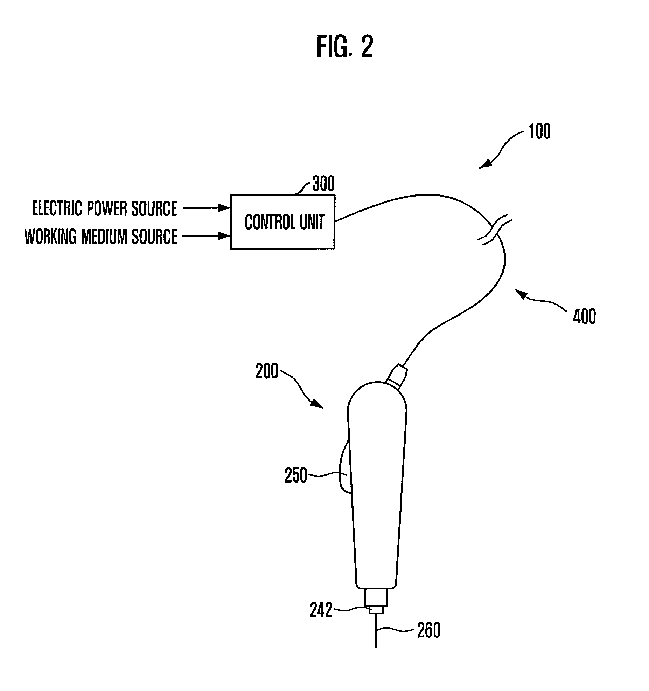

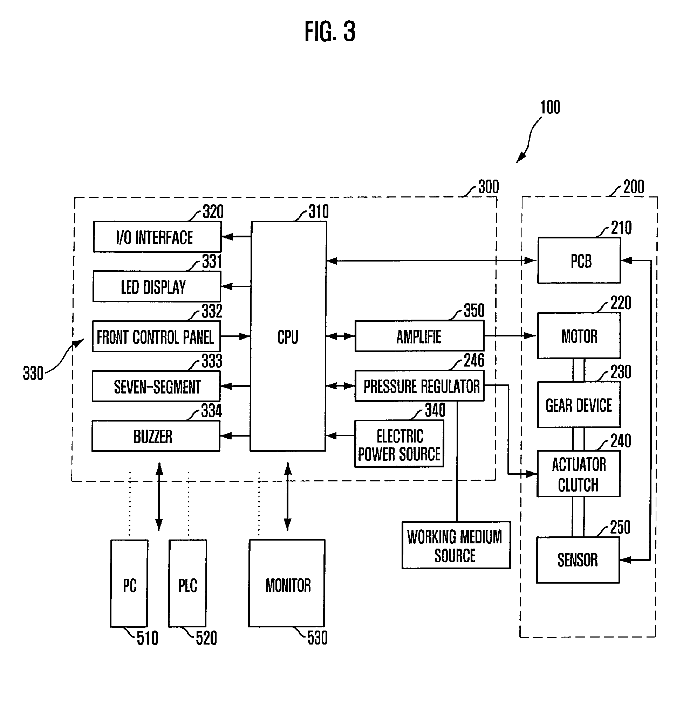

Fig. 2 is a view schematically showing a configuration of a tool system in accordance with one embodiment of the present invention. Fig. 3 is a block diagram illustrating the present tool system provided with a torque-controlling actuator clutch in accordance with one embodiment of the present invention. Referring to Figs. 2 and 3, a tool system 100 in accordance with the present invention includes a tool unit 200 as a power driver, a control unit 300 for controlling the tool unit 200 and a cable 400 for interconnecting the tool unit 200 and the control unit 300. Unlike the prior art, the present tool system 100 is capable of finely and accurately controlling the torque with which a screw is fastened to a workpiece.

The tool unit 200 includes a printed circuit board 210, an electrically, pneumatically or hydraulically operated motor 220, a gear device 230 operatively connected to the motor 220, an actuator clutch 240 operatively connected to the gear device 230 and a sensor 250 connected to a PCB 210.

The control unit 300 serves to control the operation of the tool unit 200 by controlling the flow of an electric current, a pressurized air or hydraulic pressure supplied to the motor 220 and the actuator clutch 240. The control unit 300 includes a microprocessor (CPU) 310 programmed in a plurality of operation modes and designed to output signals corresponding to the operation modes, an input/output interface 320 connected to the microprocessor 310, a plurality of operation and display units 330, 331, 332, 333 and 334, an electric power source 340 and an amplifier 350.

Under the control of the control unit 300, the electric power and the pneumatic or hydraulic pressure are supplied from the electric power source and the working medium source to the tool unit 200 through the cable 400.

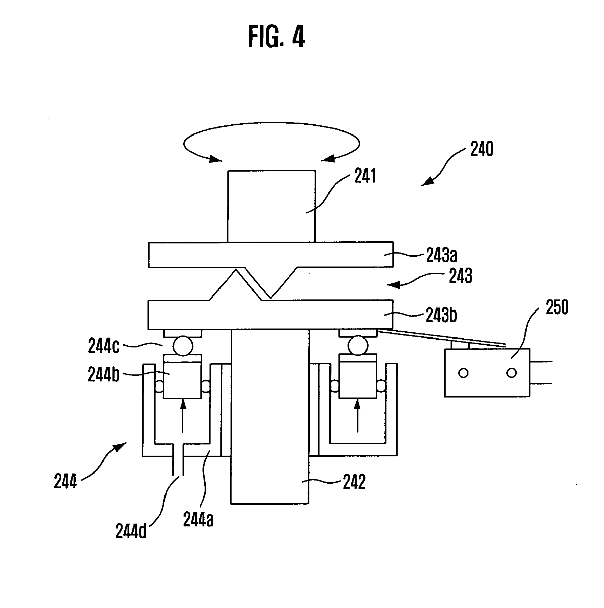

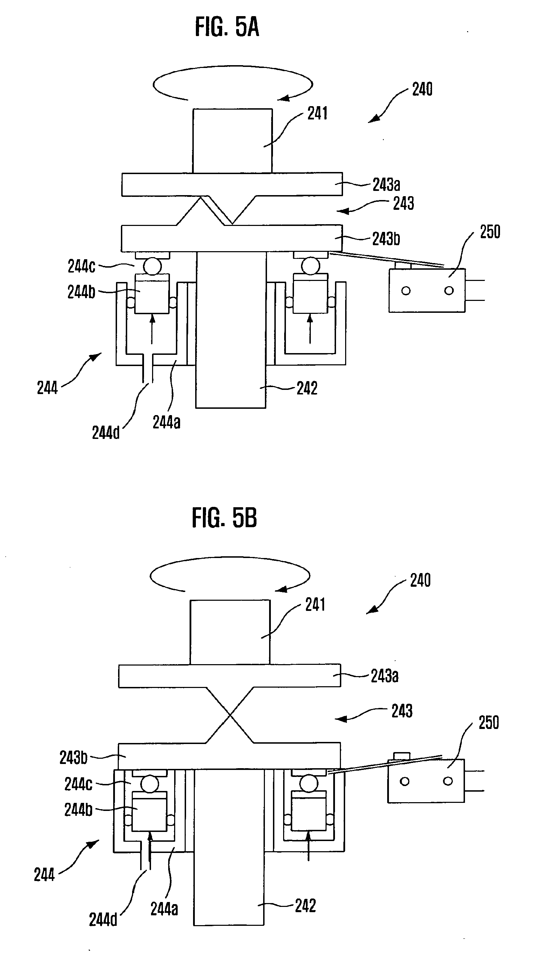

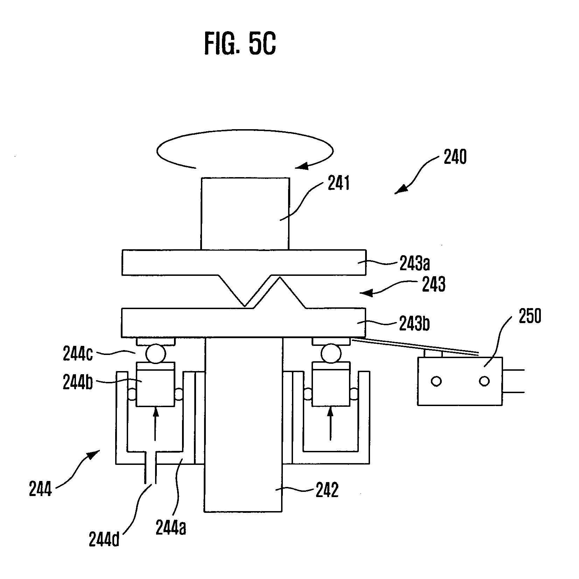

Major features of the present invention will now be described in more detail. Fig. 4 is a view showing the torque-controlling actuator clutch in accordance with one embodiment of the present invention. Figs. 5A, 5B and 5C are explanatory views illustrating the operation of the torque-controlling actuator clutch in accordance with one embodiment of the present invention.

Referring to Figs. 2, 3 and 4, the actuator clutch 240 in accordance with one embodiment of the present invention includes a driving shaft 241 rotatingly driven by the motor 220, a driven shaft 242 operatively connected to and rotated by the driving shaft 241, the bit removably attached to the driven shaft 241, a clutch mechanism 243 for selectively coupling and uncoupling the driving shaft 241 and the driven shaft 242, and an actuator 244 operated by a pressure of a working medium for pressing the clutch mechanism 243 into engagement so that a' torque can be transferred from the driving shaft 241 to the driven shaft 242. The pressure of the working medium supplied to the actuator 244 and the torque transferred from the driving shaft 241 to the driven shaft 242 are controlled by the control unit 300.

The tool system 100 further includes a pressure regulator 246 controlled by the control unit 300 for regulating the pressure of the working medium supplied to the actuator 244 and a sensor 250 for detecting disengagement of the clutch mechanism 243 to generate an electrical signal. The control unit 300 is designed to control the pressure regulator 246 in such a manner that the pressure of the working medium supplied to the actuator 244 corresponds to a torque value pre-stored in the control unit 300. Furthermore, the control unit is designed to stop the motor 220 in response to the electric signal generated by the sensor 250.

A pressurized air or pressurized fluid is supplied to the actuator 244 from the working medium source so that the actuator 244 can actuate the clutch mechanism 243. Although the actuator 244 is operated by a pneumatic or hydraulic pressure in the present embodiment, other kinds of pressing forces such an electromagnetic force or the like may be used as long as they can cause the actuator 244 to actuate the clutch mechanism 243.

The clutch mechanism 243 includes a first clutch member 243a fixed to the driving shaft 241 and a second clutch member 243b fixed to the driven shaft 242. The first and second clutch members 243a and 243b remain engaged with each other to transfer the rotational movement of the driving shaft 241 to the driven shaft 242. As shown in Fig. 4, the first and second clutch members 243a and 243b are provided with mutually facing cam surfaces that engage with each other. The cam surfaces may be replaced with other equivalent structures. The first clutch member 243a is axially fixed but the second clutch member 243b is moved toward or away from the first clutch member 243a by means of the pneumatically or hydraulically operated actuator 244. In other words, the first clutch member 243a is coupled with the second clutch member 243b with a variable coupling force. The coupling force between the first and second clutch members 243a and 243b is decided by the pneumatic or hydraulic pressure applied to the actuator 244. Depending on the magnitude of the pneumatic or hydraulic pressure, the actuator 244 presses the second clutch member 243b against the first clutch member 243a with a variable pressing force.

The actuator 244 is arranged below the clutch mechanism 243 to displace the second clutch member 243b toward or away from the first clutch member 243a. The actuator 244 includes a cylinder 244a, a piston 244b slidably fitted to the cylinder 244a and a bearing 244c interposed between the piston 244b and the second clutch member 243b. The cylinder 244a has an inlet/outlet port 244d through which a pressurized working medium such as an air or fluid is introduced into or discharged from the interior of the cylinder 244a. As the pressurized working medium is introduced into the interior of the cylinder 244a through the inlet/outlet port 244d, the second clutch member 243b fixed to the driven shaft 242 is moved toward the first clutch member 243a. The bearing 244c allows the second clutch member 243b to freely rotate relative to the piston 244b. If necessary, the bearing 244c may be replaced with other devices having an equivalent function.

The actuator clutch 240 of the present embodiment further includes a pressure regulator 246 (see Fig. 3) for regulating the pressure of a working medium such as an air or fluid supplied from the working medium source. This makes it possible to finely regulate the pressure of the working medium supplied to the actuator 244, thereby accurately controlling the torque transferred through the actuator clutch 240. Although not shown in the drawings, the pressure regulator 246 is formed of an electrically controlled pressure regulating valve well-known in the art.

Next, the operation of the actuator clutch 240 configured as above will be described with reference to Figs. 5A to 5C.

If the working medium is supplied into the actuator 244 through the inlet/outlet port 244d, the second clutch member 243b is pressed against the first clutch member 243a, consequently keeping the clutch mechanism 243 in a coupled state as illustrated in Fig. 5A. In case the load applied to the driven shaft 242 is smaller than the pressure acting within the cylinder 244a of the actuator 244, the first and second clutch members 243a and 243b remains engaged with each other.

In contrast, if the load applied to the driven shaft 242 becomes greater than the pressure acting within the cylinder 244a, the second clutch member 243b is moved away from the first clutch member 243a. Therefore, the first and second clutch members 243a and 243b are disengaged from each other as illustrated in Fig. 5B. Under this state, if the load applied to the driven shaft 242 grows smaller than the pressure acting within the cylinder 244a, the first and second clutch members 243a and 243b come into engagement with each other as illustrated in Fig. 5C.

At the moment when the first and second clutch members 243a and 243b are disengaged from each other as illustrated in Fig. 5B, the sensor 250 detects the displacement of the second clutch member 243b and generates an electric signal corresponding thereto. Responsive to the electric signal, the control unit 300 deenergizes the motor 220 to thereby stop rotation of the driving shaft 241 and the driven shaft 242. This makes it possible for an operator to drive a screw with a pre-set torque by use of the tool unit 200 having the torque-controlling actuator clutch 240. It is also possible to control the torque of the driven shaft 242, i.e., the disengaging force of the clutch mechanism 243, by regulating the pressure of the working medium supplied into the cylinder 244a of the actuator 244. Although the sensor 250 is used to detect the movement of the second clutch member 243b in the present embodiment, other equivalent detecting means may be used in place of the sensor 250.

The pressure acting within the cylinder 244a, i.e., the pressure of the working medium supplied into the cylinder 244a of the actuator 244 through the input/output port 244d, is finely regulated to a desired value by means of the pressure regulator 246 under the control of the control unit 300. Thus, it becomes possible to easily and accurately control the torque transferred through the clutch mechanism 243.

In the present embodiment, the control unit 300 is designed to control the pressure regulator 246 in such a manner that the actuator 244 is supplied with the pressure corresponding to the torque value pre-stored in the control unit 300. Therefore, the clutch mechanism 243 is disengaged when the load applied thereto reaches the pre-stored torque value. In response, the sensor 250 feeds an electric signal indicative of the disengagement of the clutch mechanism 243 to the control unit 300 so that the control unit 300 can deenergize the motor 220 and stop the rotation of the driving shaft 241 and the driven shaft 242. In this regard, the pressure acting within the actuator 244 is kept constant unless the torque value pre-stored in the control unit 300 is changed by an operator.

Upon operating the sensor 250 of the tool unit 200, a continuously activated electric signal, i.e., a rotation-triggering signal is inputted to the control unit 300 which in turn allows the motor 220 to rotatingly drive the driven shaft 242. When the second clutch member 243b is moved away from the first clutch member 243a, a temporarily activated pulse signal, i.e., a rotation-stopping signal is inputted to the control unit 300 which in turn allows the motor 220 to stop the rotation of the driven shaft 242. Responsive to the rotation-triggering signal or the rotation-stopping signal, the control unit 300 allows a pressure corresponding to the pre-stored torque value to be supplied to the actuator 244, thereby rotatingly driving or stopping the driven shaft 242.

The electrically controlled valve of the pressure regulator 246 is controlled by means of the microprocessor 310 of the control unit 300. The torque value is directly inputted by an operator and stored in the control unit 300 on a torque unit basis.

For example, a plurality of torque values is directly keyed in by a user and stored in the control unit 300. The microprocessor 310 feeds a pressure signal corresponding to one of the torque values to the pressure regulator 246. Thus, the actuator is supplied with a controlled pressure to thereby control the engagement or disengagement of the clutch mechanism 243. In the regard, the microprocessor 310 is able to receive an input signal for pressure regulation on a numerical basis. The output torque corresponding to the regulated pressure may vary with the types of the clutch mechanisms and may depend on the types of screw fastening tasks (e.g., a hard joint work or a soft joint work). The control unit 300 is capable of compensating the variations in the output torque and controlling the output torque with specified offset values. In other words, the actuator clutch 240 of the present embodiment is able to obtain substantially the same torque value despite the difference in the shape, rotational speed and kind of an object to be fastened. The control unit 300 is equipped with software pre-programmed so that the variations in the output torque can be compensated depending on the difference in the shape, rotational speed and kind of an object to be fastened (namely, so that the pressure supplied to the actuator 244 can be automatically calculated and compensated to rotate the driven shaft 242 with a controlled torque.

With the present invention as described hereinabove, it is possible to accurately control the engaging force of the clutch mechanism 243 by finely regulating the pressure of the working medium supplied to the actuator 244. Regulation of the pressure of the working medium is performed by means of the microprocessor 310 on a real time basis. The torque values are set by analyzing the correlation between the pressure of the working medium and the output torque of the driven shaft 242 and is inputted to the control unit 300 (the microprocessor 310) on a numerical basis, thereby controlling the torque generated in the tool unit 200. This eliminates the need to use a separate torque meter which would otherwise be needed to set a desired torque. The inputted torque values may be stored in different locations of the control unit 300 and may be selected by a user in many different ways.

Using a front control panel 332 and a seven-segment 333 of the operation and display unit 330, it is possible to input desired torque values to the microprocessor 310 with the aid of software, which torque values are used in controlling the pressure of the working medium supplied to the actuator 244. The control unit 300 may operate in association with a personal computer 510 and a programmable logic controller 520. The operation of the control unit 300 may be monitored by use of a monitor 530.

As described above, the tool system 100 of the present invention is comprised of the tool unit (screw driver) 200 provided with the motor 210, the control unit 300 for controlling the electric power and the pressure of the working medium to rotate the driven shaft 242 with a controlled torque, and the cable 400 through which the electric current and the working medium are supplied. In the present invention, the actuator 244 may be either a pneumatic actuator using an air as the working medium or a hydraulic actuator using fluid as the working medium.

Although the control unit 300 and the tool unit 200 are separately formed in the foregoing embodiment, the control unit 300 may be built in the tool unit 200 so that the control unit 300 can serve as a control unit of the actuator clutch 240 of the tool unit 200. Alternatively, the actuator clutch 240 of the tool unit 200 may be controlled by means of the control unit 300 alone.

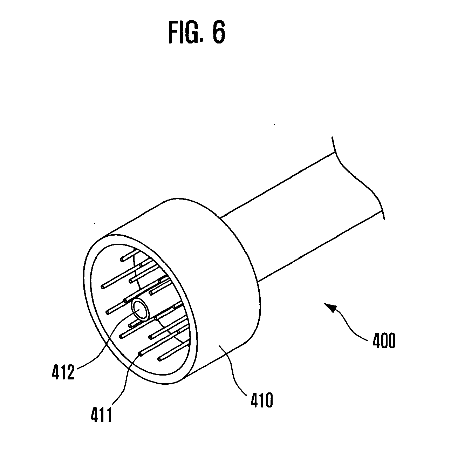

Fig. 6 is a perspective view showing a plug of the cable employed in the present tool system. The control unit 300 and the driver 200 are connected to each other by means of the cable 400 as shown in Fig. 6. The cable 400 has a plug 410 specially designed for simultaneous connection with an electric power source and a working medium source. In other words, the plug 410 is provided with an electric power terminal 411 and a working medium terminal 412, which makes it possible to simultaneously supply the electric power source and the working medium using a single plug.

The tool system of the present invention as described above provides the flowing advantageous effects. The tool system employs a highly efficient pneumatic or hydraulic motor that enjoys long lifespan, reduced noise, reduced heat generation and lightweight. This helps relieve the fatigue of a user and improve workability. The tool system makes it easy to change a desired torque digitally set and stored in a memory. The tool system can also be manufactured in a cost-effective manner. The tool system has a fastening quality monitoring function and a counter function and is capable of displaying an abnormal operation with a variety of error codes. The tool system has an ability to communicate with external devices through communication ports (e.g., an RS-232C port) and enables a user to monitor the fastening information by use of a personal computer. Furthermore, the tool system is capable of enabling a user to set parameters and providing the information on maintenance period of individual components.

Moreover, it is possible to select one of torque value storage locations by directly connecting a sensor or a switch to a torque selection terminal provided in the control unit 300. In case the tool system is used in association with the programmable logic controller 520, it is possible for the programmable logic controller 520 to directly select and use torque value storage locations. A remote control function can also be realized by use of a parallel input/output port.

In addition, the tool system of the present invention has a counter function and other related functions. With the tool system 100 described above, it is possible to set and display the total number of screws fastened (including the number of remaining screws) in the light-emitting diode display. It is also possible to determine and display the abnormality occurring in the screw fastening process. Furthermore, it is possible to select the method of inputting and outputting a count-starting signal and a count-ending signal. If necessary, the tool system may be used in association with two or more control devices. The operation of the tool system can be monitored on a real time basis by use of a personal computer. The content of errors and the time required in fastening screws may be displayed in the personal computer and conformed by a user. It is also possible to monitor the operation of the tool unit 200 in the personal computer by using a communication port of the control unit 300.

The embodiment set forth hereinabove has been presented for the illustrative purpose only and, therefore, the present invention is not limited to the foregoing embodiment. It will be understood by those skilled in the art that various changes and modifications may be made without departing from the scope of the invention defined in the claims.

## Claims

1. A torque-controlling actuator clutch for use in a tool system with a motor for rotating a bit, comprising:
a driving shaft rotatingly driven by the motor;
a driven shaft operatively connected to and rotated by the driving shaft, the bit removably attached to the driven shaft;
a clutch mechanism for selectively coupling and uncoupling the driving shaft and the driven shaft; and
an actuator operated by a pressure of a working medium for pressing the clutch mechanism into engagement so that a torque can be transferred from the driving shaft to the driven shaft.

2. The torque-controlling actuator clutch as defined in claim 1, wherein the clutch mechanism includes a first clutch member fixed to the driving shaft and a second clutch member fixed to the driven shaft, the actuator designed to press the second clutch member against the first clutch member when the working medium is supplied to the actuator.

3. The torque-controlling actuator clutch as defined in claim 2, wherein the actuator includes a cylinder for receiving the working medium, a piston slidably fitted to the cylinder for pressing the second clutch member when extended and a bearing arranged between the piston and the second clutch member.

4. A tool system comprising:
a tool unit including a motor for rotating a bit and an actuator clutch engaged and disengaged by a pressure of a working medium for operatively connecting and disconnecting the bit and the motor;
a control unit for controlling the pressure of the working medium supplied to the actuator clutch and for stopping the motor when the actuator clutch is disengaged; and
a working medium source for supplying the working medium to the actuator clutch.

5. The tool system as defined in claim 4, wherein the actuator clutch comprises:
a driving shaft rotatingly driven by the motor;
a driven shaft operatively connected to and rotated by the driving shaft, the bit removably attached to the driven shaft;
a clutch mechanism for selectively coupling and uncoupling the driving shaft and the driven shaft; and
an actuator operated by the pressure of the working medium for pressing the clutch mechanism into engagement so that a torque can be transferred from the driving shaft to the driven shaft.

6. The tool system as defined in claim 4, further comprising a pressure regulator controlled by the control unit for regulating the pressure of the working medium supplied to the actuator and a sensor for detecting disengagement of the clutch mechanism to generate an electrical signal.

7. The tool system as defined in claim 6, wherein the control unit is designed to control the pressure regulator in such a manner that the pressure of the working medium supplied to the actuator corresponds to a torque value pre-stored in the control unit.

8. The tool system as defined in claim 6, wherein the control unit is designed to stop the motor in response to the electric signal generated by the sensor.

9. The tool system as defined in claim 5, wherein the clutch mechanism includes a first clutch member fixed to the driving shaft and a second clutch member fixed to the driven shaft, the actuator designed to press the second clutch member against the first clutch member when the working medium is supplied to the actuator.

10. The tool system as defined in claim 6, wherein the clutch mechanism includes a first clutch member fixed to the driving shaft and a second clutch member fixed to the driven shaft, the actuator designed to press the second clutch member against the first clutch member when the working medium is supplied to the actuator.

11. The tool system as defined in claim 9, wherein the actuator includes a cylinder for receiving the working medium, a piston slidably fitted to the cylinder for pressing the second clutch member when extended and a bearing arranged between the piston and the second clutch member.

12. The tool system as defined in claim 10, wherein the actuator includes a cylinder for receiving the working medium, a piston slidably fitted to the cylinder for pressing the second clutch member when extended and a bearing arranged between the piston and the second clutch member.
